# EUROPEAN PATENT SPECIFICATION

(11) **EP 1 161 055 B1**
(45) Date of publication and mention of the grant of the patent: **03.05.2006**
(21) Application number: 01480006.4
(22) Date of filing: 23.01.2001
(51) Int. Cl.: H04L 29/06

(54) **System and method of associating devices to secure commercial transactions performed over the internet**
System und Verfahren zur Verknüpfung von Vorrichtungen um geschäftlichen Transaktionen über Internet zu sichern
Procédé et système d'association de dispositifs pour sécuriser des transactions commerciales effectuées sur l'Internet

(30) Priority: 29.02.2000 EP 00480024
(43) Date of publication of application: 05.12.2001
(73) Proprietor: International Business Machines Corporation, Armonk, NY 10504 (US)
(72) Inventor: Fiammante, Marc, 06700 St Laurent du Var (FR)
(74) Representative: Etorre, Yves Nicolas

(56) References cited:
- FR-A- 2 795 897
- US-A- 5 986 565

## Description

### Field of the Invention

The present invention relates generally to the Internet and more particularly applies to electronic commerce and to commercial-like transactions that take place over the Internet requiring that originator of such a transaction should neither be able to masquerade as someone else (originator must be authenticated) nor can later deny to have actually effected the transaction (non-repudiation).

### Background of the Invention

Commerce over the Internet is dramatically expanding. It involves all sorts of transactions implying the movement of electronic money. All of this is taking place over what is, basically, a very unsecured network. Therefore, based on cryptography, numerous techniques and methods have been devised not only ensuring confidentiality of the transactions but also, this is often even more important, authentication, integrity and non-repudiation. Authentication is required to ascertain the origin of a transaction so as no one should be able to masquerade as someone else. Integrity is key to make sure that a transaction has not been modified, unintentionally or maliciously, on its way through the network to destination e.g., a server aimed at processing the customer orders. Finally, non repudiation is essential to make sure that a completed transaction, that may involve a lot of money, may not just be denied later on by any of the participants.

Accessing the Internet is mainly achieved nowadays from a PC (Personal Computer), a WS (Work Station) or any computer-like device capable of running a piece of software, referred to as a browser, in order to be able to get on the World-Wide Web (or just the Web) the ubiquitous application that has accompanied the explosive growth of the Internet in past years. Thus, an Internet commerce site is a particular Web site aimed at handling commercial transactions. A well-known site is e.g., located at http://www.amazon.com/. It is a huge virtual bookstore selling also music and videos. They claim that millions of people, from many countries, have indeed made online shopping on their site. Although such sites also claim they are completely safe (since one has to disclose them a credit card number to buy something) they actually fail meeting satisfactorily all of the criterions here above mentioned that is, authentication, integrity and non-repudiation. To reach completely these objectives connecting PC's would need to be equipped with smart card readers and users would have to carry a token i.e., intelligent chip-cards or smart-cards so that authentication based on the knowledge (PIN or password) and possession (card) principle can be carried out. Smart-cards are also suitable for storing certificates and encryption keys securely. Smart cards with an integrated crypto-processor can implement cryptographic functions directly on the card so that the keys never leave the smart card. For example, a digital signature, which generally consists in encrypting, with user private key, a digest obtained through the application of a hash function over transaction content then, appended to it so that recipient may later check the transaction with user public key and make sure that it has not been altered on its way and has well been originated by whom possesses the corresponding private key. This eliminates any possibility of the key falling into the wrong hands. However, all of this is only possible is PC is indeed equipped with the proper hardware i.e., a card reader and the corresponding software or device driver to perform the adaptation with the OS (Operating System) running on the PC. This is a new technology and a new type of I/O port to be added to PC's. This has a cost which does not fit well with the general trend that wants to reduce as much as possible the operational expenses of a private or enterprise network hence, requiring to lower the cost of terminal equipment's and TCO (Total Cost of Ownership). Thus, in practice, when manufactured, PC's are still seldom equipped with such card readers. Although a separate chip card reader can always be later added to a particular PC this requires that the corresponding software, the device driver, be also installed thus further personalizing it.

On the other hand another even more explosive market is the one of mobile wireless communications first mainly driven by mobile digital cellular phones however, rapidly evolving to cover other applications in relation with the Internet such as e-mail in a first place. It is anticipated that electronic commerce applications such as personal banking, stock trading, gambling, ticket reservations and shopping will soon become commonly available on mobile phones. Hence, the security of data communications over wireless networks has become a major concern to mobile commerce businesses and users which has triggered the development of products to build secure systems that solve the core requirements of electronic commerce security already here above mentioned namely: confidentiality, authentication, integrity and non-repudiation. Also, standards are being put in place to control the development of such products and make sure that they may inter operate. The Wireless Application Protocol (WAP) Forum (http://www.wapforum.org) has thus become the de facto worldwide standard for providing Internet communications and advanced telephony services on digital mobile phones, pagers, personal digital assistants and other wireless terminals. Therefore, all these devices, contrary to PC's, are promised to be upfront equipped with all necessary features and functions so as to guarantee security of electronic commerce transactions. Nevertheless, they all also have inherent limited display capability and rudimentary user interface along with limited processing power, battery life and storage apabilities.

One such solution is disclosed in US-A-5 986 565.

Therefore it is a broad object of the invention to also combine the advantages of PC's which have great display and user interface capabilities with the built-in security features of modern wireless mobile devices so as to enable convenient and secure electronic commerce transactions.

Further objects, features and advantages of the present invention will become apparent to the ones skilled in the art upon examination of the following description in reference to the accompanying drawings. It is intended that any additional advantages be incorporated herein.

### Summary of the Invention

A method and a system of associating communications devices to carry out a secure transaction over an untrusted network from an electronic commercial-like site are disclosed. The communications devices are independently capable of communicating with the electronic commercial-like site which manages a directory of legitimate users each having an identification record. The users are also assumed to possess a token e.g., a chip-card. Then, whenever one legitimate user desires to carry out a secure transaction this latter is first prepared with the help of a first communications device, featuring convenient human being interfaces e.g., a personal computer. When done, an approval of the secure transaction content is forwarded to the commercial-like site, from the first communications device. When the approval is received in the commercial-like site the identification of a second communications device, through which the legitimate user is reachable, is retrieved from its identification record. This triggers the issuing of a request, from the commercial-like server towards the second communications device, to have the secure transaction signed. Hence, signature of the secure transaction is carried out with the second communications device, enabled by the token of the legitimate user thus, obtaining a signed secure transaction which is transmitted back to the commercial-like site which performs a final checking in order to complete the secure transaction.

Therefore, the method and system of the invention combine built-in features of standard communications devices to conveniently carry out secure commercial-like transactions over an intrusted network i.e., the Internet. Especially, the invention neither requires that standard personal computers or work station be equipped with a chip-card reader nor that wireless mobile devices need to have large displays and keyboards to be able to carry through elaborated transactions.

### Brief Description of the Drawings

- **Figure 1**: depicts the state of the art where the Internet can be accessed independently either from a personal computer or a wireless mobile device.
- **Figure 2**: is an example of a commercial transaction, per the invention, in which a personal computer and a wireless mobile device cooperate to carry it out.
- **Figure 3**: shows an example of the correlation table, according to the invention, cross referencing the transaction identifiers that permits to perform a secure transaction.
- **Figure 4**: illustrates the overall architecture of the system through an example involving a personal computer and a cellular mobile phone.

### Detailed Description of the Preferred Embodiment

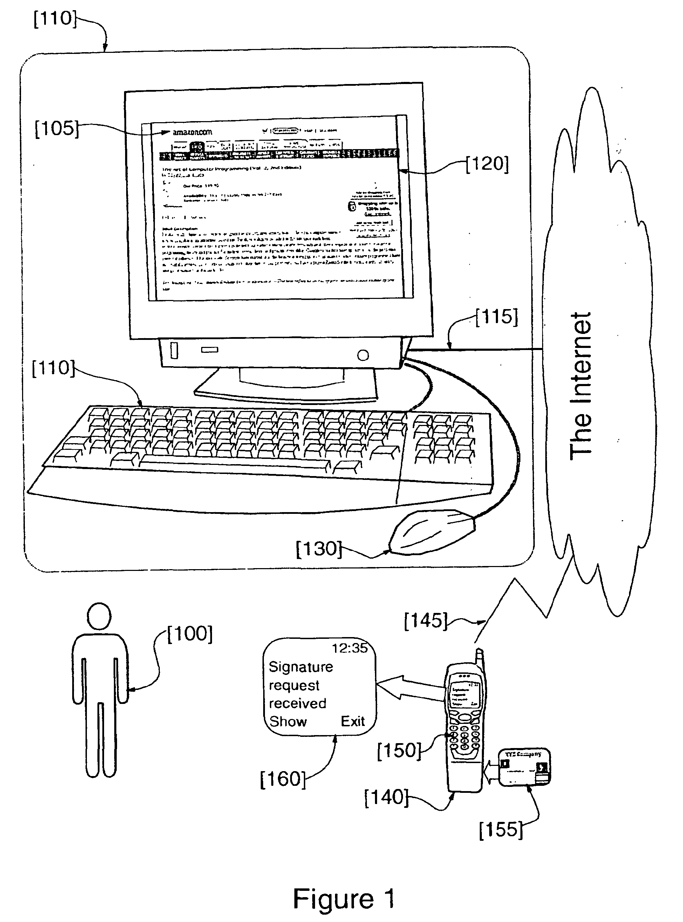

**Figure 1** illustrates current art where a user [100] may have access to a commercial Internet Web site e.g., the AMAZON.COM virtual bookstore [105] (at http://www.amazon.com) to perform a transaction such as buying a book. This can be done e.g., from a personal computer (PC) [110] having a connection to the Internet [115] through a modem or a LAN (local area network) and running a browser capable of conveniently displaying pages from the here above Web site so as user [100] can gather all necessary information on what it is buying. Current PC's are always equipped with large display monitors [120] having at least a 15-inch wide screen (diagonal) capable of displaying 800x600 pixels or more. PC's are also always equipped with a 100-key⁺ keyboard [125] and a pointing device, usually a mouse [130]. The same user [100] is also commonly carrying a mobile telephone [140] or any equivalent wireless portable device which are now able to connect to the Internet too [145]. Moreover, they are personalized with a token e.g., a smart-card or chip-card [155] so as user [100] may be uniquely identified. However, contrary to PC's, those wireless portable devices have very poor display capabilities [160], limited to a few lines of a few characters, and have rudimentary numeric keyboards [150].

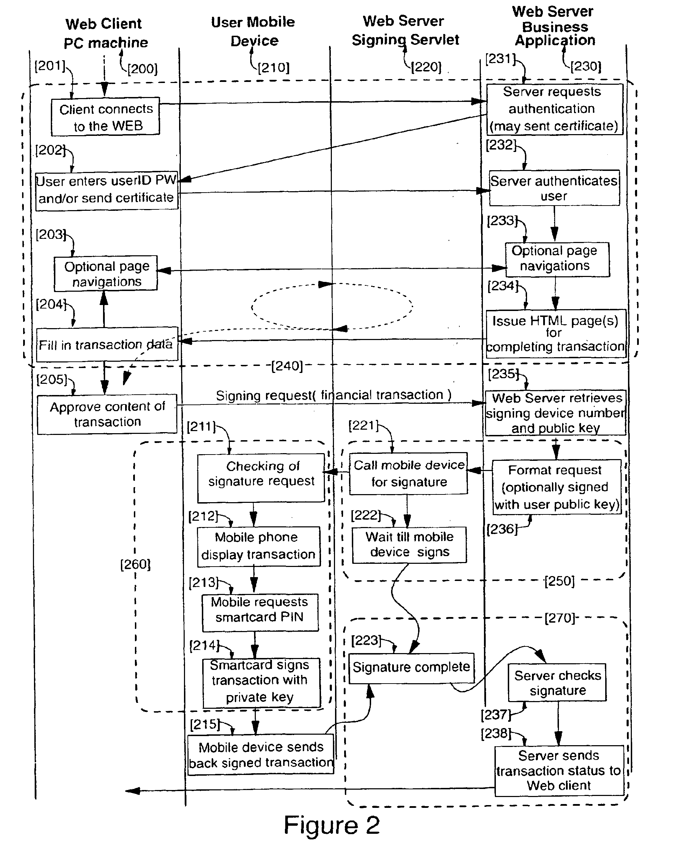

**Figure 2** depicts a typical transaction according to the invention, involving a client PC machine [200] (or a work station or any computer-like device) and a wireless portable mobile device [210] e.g., a mobile phone. Transaction is initiated from the client PC at step [201] when a user, having access to this PC, must reach a remote server, typically through the Internet or through any public and/or private network or combination of, on which a business application [230] is running setting up the commercial-like site user desires to deal with. In the example chosen in figure 1 this is the amazon.com virtual bookstore. Then, the first action from the application is to request [231] client authentication. User responds to the request complying with whatever method is in effect in the server i.e., provides credentials to be recognized as a legitimate user. The standard practice is to send [202] a user ID with a password. More sophisticated methods might also require the sending, by the client and/or the server, of certificates issued by a third party i.e., a CA (Certificate Authority), trusted by user and/or server. Irrespective of the method enforced in the server, when satisfied, this latter eventually authenticates the user [232] unless (this is not shown) user fails answering satisfactorily in which case the transaction is obviously aborted by the server. All of this can actually be implemented from various well known methods known by those skilled in the art. Many variants exist. As an example, certificates could be X.509 certificates as described in RFC2459 of the IETF (Request For Comments of the Internet Engineering Task Force) used by the Web browsers supporting SSL (Secure Socket Layer) protocol which is being standardized under the name of TLS (Transport Layer Security) protocol in RFC2246. As far as Web server is concerned the only other assumption is that it is capable of generating static and dynamic HTML (Hyper Text Markup Language) pages, the language of the Web, that are thus view able from the Web browser client machine [200].

When the user has been recognized as a legitimate user by the server it is then permitted to browse the server HTML pages of the application so as to gather all the necessary information regarding the transaction user wants to perform. This assumes that multiple exchanges may have to take place between the client machine [203] and the server [233] and generally require that users fill virtual forms [204] i.e., dynamic HTML pages formatted by the server [234], that this latter will use to interpret the content of the transaction so as to determine what user intends to do. In the previous simple example of the amazon.com server, a virtual shopping cart is filled e.g., with book(s) that the user desire to acquire. While filling its cart a user has thus, optionally, the possibility of consulting all the information provided by the server about the books, their authors, the press critics along with their prices, availability, delivery options and generally all sorts of data that a customer is willing to know before proceeding to a virtual cash register.

Thus, when the user is finally satisfied with the content of the transaction thus, having completed the overall preparation phase [240] it eventually approves it [205] from the client PC. Still referring to the here above example of the amazon.com bookstore this occurs when it has finished filling its virtual shopping cart. In another example this is because user has finalized its today list of shares he wants to sell or buy through the server of its preferred broker. Obviously, although not explicitly shown, user has always the freedom of aborting the transaction any time before completion. Or, the transaction may be aborted just because something wrong happens between the client PC and the server such as an interruption of the communication. However, normally, the transaction is approved by the user from the client PC [205]. At this point, in most of today's commercial Web site, the essential of the transaction is over if one excepts the sending by the server of a closing message confirming the terms and content of the transaction also thanking the user that is, the Web site customer. However, all of this rests on the good faith of both parties. The owner of the commercial Web site might not sent the ordered items. The user might use a fake or stolen credit card number or it may later deny to have really effected the transaction. To overcome this, methods have been devised so as none of the parties involved can masquerade as someone else nor may later deny to have effected the transaction. However, this requires some form of strong authentication and electronic signature that the user side may only fulfilled if the client PC is indeed equipped with the proper equipment that is, a smart-card reader and its related supporting software or 'driver', so as the user of the client PC may prove it is the one it pretends to be through the possession of a token i.e., its smart-cart. However, standard PCs and working stations are seldom equipped nowadays with such a piece of hardware and there is no clear sign that this will become a standard feature (like a mouse) in a foreseeable future even though, it is obviously always possible to add, on a particular PC, a separate card reader and install the proper software to drive it.

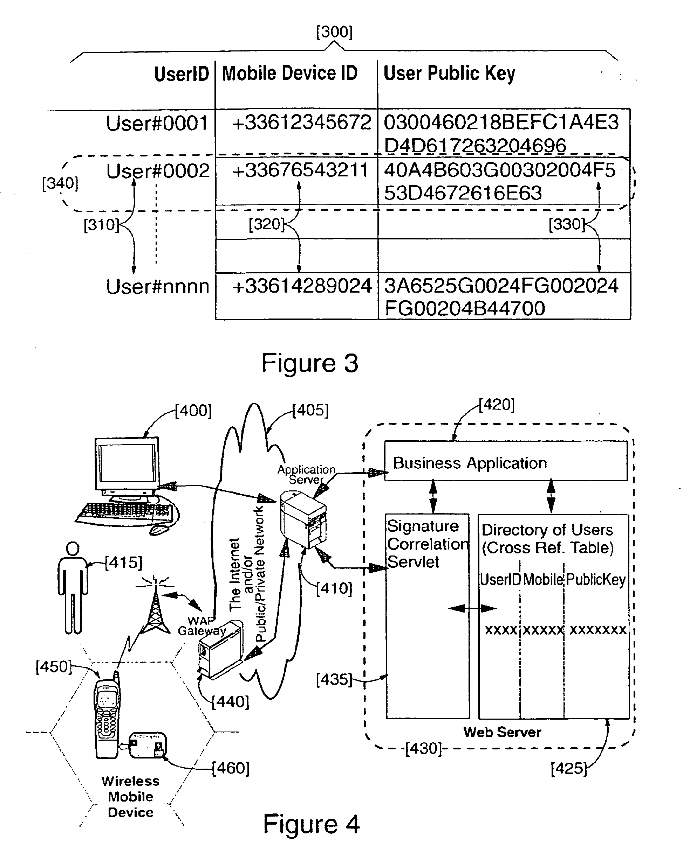

On the other hand, while Internet and the electronic commerce was dramatically growing, an even more explosive market is the one of the wireless mobile devices; first of all, cellular mobile phones, which have been universally accepted. Because the latest versions of these devices are now able to connect to the Internet too and also, because their use is conditioned to the insertion of a smart-card, so that the bearer is identified, they become the device of choice to perform strong authentication and to approve and sign commercial transactions. Therefore, the method of the invention assumes that the user of the client PC, that has initiated the transaction, is also carrying such a wireless mobile portable device. Then, transaction goes on with step [235] when Web server needs to obtain the signature of it by the user. To do so, server manages at least one table, an example of which is further described in figure 3, cross-referencing all legitimate user IDs that are permitted to access the Web site along with their mobile device ID and public key (held in the user own token e.g., a smart-card). Hence, table is looked-up to retrieve user phone number and smartcard public key. After which, the transaction data are formatted and optionally signed [236] using the user smart-card public key also, optionally, further countersigned with the server private key (so as user is made certain of the origin of the transaction if necessary) and the Web server dials automatically the user mobile phone [221], using WTA standard previously discussed, providing for mechanisms that allow origin servers to deliver data to a mobile terminal even though this latter has not issued any request. Meanwhile, Web server holds PC Web request [222] until mobile device eventually responds. This part of the signature process, in which business application is issuing the signature request [250], is shown to be implemented here mainly under the form of a so-called Java™ Servlet [220]. While Java™ is, among other things, a popular, simple, object-oriented, distributed and interpreted general-purpose programming language developed by Sun Microsystems (Sun Microsystems, Inc., 901 San Antonio Road, Palo Alto, CA 94303 USA.) Java™ Servlets are small, platform-independent Java™ programs that can be used to extend the functionality of a Web server in a variety of ways thus, are convenient to implement the signing function of the invention. However, this is only one example of carrying out the invention. The ones skilled in the art will recognize that, without departing from the spirit of the invention, it may be implemented in many alternate equivalent ways. Especially, the signing process could be imbedded into the Web Server application so as the two processes [220] and [230] are merged. When user accepts the incoming call on his mobile device, Web generated transaction content, optionally signed with user public key and possibly countersigned with server private key, may be checked by the smartcard if it is necessary to ascertain its origin [211]. Then, user is prompted to validate the transaction. At this point user may want to review the content of the transaction [212] received on its mobile wireless device (which is sufficient in general to be sure what transaction is being signed). Transaction may be displayed on the mobile screen, preferably in an abridged form for the sake of convenience, due to the limited capacity of the display of such devices. Alternatively, this step may just be replaced by the display of a number, associated with the transaction, a common practice when dealing with a Web server or ordering goods or services over the phone. This transaction number may thus be used as a correlator so as user is made certain of what transaction is being validated. After this, smart-card is requesting a PIN (personal identification code) [213] so as transaction can now be signed with user private key [214]. Using a PIN to enable this operation is standard practice with current smart-cards. More sophisticated methods are soon to be widely available. These methods have in common to use biometric data e.g., the finger prints of the user are recognized through an appropriate sensor placed on the smart-card. This will add definitively to the security hence, better contributing to reach the goals of the invention i.e., authentication, integrity and non-repudiation of commercial transactions from standard widely available devices. At this point the overall process [260] to carry out signature of the secure transaction in user mobile device is over. Then, next step [215] consists in sending back to the server the signed transaction (signed with user private key). Business application running on server thus, completes the signature cycle in a global checking step [270] including a completion step [223] for signing servlet [220], a checking step in server [237] utilizing user public key followed by the sending [238] of a last transaction status, under the form of a new Web page, to the client PC machine at the origin of the transaction.

**Figure 3** illustrates a preferred embodiment of the cross-referencing table or directory mentioned in figure 2 and required to carry out the invention. Table [300] lists the users [310] that are recognized by the Web server as being legitimate users authorized to deal with the business application. For each registered user, a mobile device ID number to call i.e., a phone number [320], is first listed. Secondly, the public key [330], corresponding to the token (smart-card) of the user, is recorded too so that server holds, in an identification record [340], for every user, all necessary information to carry out secure commercial transactions. The precise form under which table is actually implemented and the way it is searched when interrogated is beyond the scope of the invention. Those skilled in the art will recognize that numerous alternate ways e.g., tailored to favor performance or memory size required, are feasible. As an example table could be implemented to obey the specifications of LDAP (Lightweight Directory Access Protocol) a protocol for accessing on-line directory services defined by the IETF (Internet Engineering Task Force) in RFC's (Request For Comments) especially, RFC 1777. LDAP defines a relatively simple protocol for updating and searching directories running over TCP/IP (the Internet suite of protocols). An LDAP directory entry is a collection of attributes with a name, called a distinguished name (DN). The DN refers to the entry unambiguously. Each of the entry's attributes has a type and one or more values. The types are typically mnemonic strings, like "cn" for common name, or "mail" for e-mail address. LDAP directory entries are arranged in a hierarchical structure that reflects political, geographic, and/or organizational boundaries. Entries representing countries appear at the top of the tree. Below them are entries representing states or national organizations. Below them might be entries representing people, organizational units, printers, documents, or just about anything else. Therefore, cross-referencing table of the invention can advantageously be implemented under the form of a customized LDAP directory.

**Figure 4** shows all the components of the system per the invention. It involves a standard PC [400] or any computer-like machine capable of accessing, over the Internet or any combination of public/private networks [405], a server [410] running the application i.e., a business application [420] core of a commercial-like site [430] that user [415] wants to deal with. Then, initial part of the transaction is thus conducted from the PC [400]. When user is satisfied with contents and objects of the transaction it approves it. This enables the corresponding part of the business application [435] running over the server [410] and using one or more directory or cross-referencing table [425] aimed at logging the users permitted to access the business application, to trigger the sending of a signature request towards user's wireless mobile device e.g., its cellular mobile phone [450]. This is done through the network [405] and a wireless gateway [440] operated e.g., according to the Wireless Application Protocol (WAP). Hence, transaction may be approved from the token [460] that user possesses (usually a smart-card) housing, among other things, its private key, in order to complete the transaction in signing it therefore, allowing to meet all the goals of a secure transaction namely, strong authentication, integrity and non-repudiation.

## Claims

1. A method of associating communications devices [400] [450] to carry out a secure transaction over an untrusted network [405] from an electronic commercial-like site [430], said communications devices independently capable of communicating with said electronic commercial-like site, said electronic commercial-like site managing a directory [425] of legitimate users [415] each having an identification record [340], said legitimate users each possessing a token [460], said method comprising the steps of :
when ever one of said legitimate users [415] desires to carry out a said secure transaction:
preparing [240] said secure transaction from a first said communications device [400] featuring human being interfaces [110] [120] [130] to communicate with said commercial-like site [430];
when done:
forwarding to said commercial-like site, from said first communications device, an approval [205] of content of said secure transaction;
when said approval is received in said commercial-like site for said secure transaction prepared by said legitimate user:
retrieving [235] in said identification record [340] of said legitimate user an identification of a second communications device [320] through which said legitimate user is reachable;
issuing [250] in said commercial-like server towards said second communications device a request to have said secure transaction signed;
carrying out signature [260] of said secure transaction from said second communications device enabled with said token of said legitimate user thus obtaining a signed secure transaction;
transmitting [215] said signed secure transaction back to said commercial-like site;
checking [270] in said commercial-like site said signed secure transaction;
thereby, completing said secure transaction.

2. The method according to claim 1 wherein each said identification record [340] of said directory [300] in said commercial-like site includes:
a user identification [310] of a said legitimate user;
a device identification [320] of a said second communications device through which said legitimate user is reachable;
a user public key [330] contained in a said token owned by said legitimate user.

3. The method according to any one of the previous claims wherein said token [460] of said legitimate user includes the storing of:
a user private key;
a personal identification number (PIN).

4. The method according to any one of the previous claims wherein said preparing step includes the steps of:
accessing [201] a Web server business application [230] in said electronic commercial-like site [430];
providing, in response to a request for authentication [231] from said Web server business application, credentials [202] to be recognized as a legitimate user [232];
browsing [203] [233] said electronic commercial-like site;
filling in [204] [234] all required information to allow completion of said commercial-like transaction.

5. The method according to any one of the previous claims wherein said issuing step [250] includes the steps of:
formatting [236], in said commercial-like site, a request to have said secure transaction signed in said second communications device, said step of formatting a request optionally including the further steps of:
signing origin of said request, said step of signing origin including:
employing said user public key of said legitimate user;
additionally employing a private key of said commercial-like site;
forwarding [221], from said commercial-like site, to said second communications device said request;
waiting [222] till said second communications responds.

6. The method according to any one of the previous claims wherein said step of carrying out signature [260], in said second communications device, includes the steps of :
checking [211] said request to have said secure transaction signed, said step of checking optionally including the further step of:
authenticating origin of said request;
displaying [212] content of said secure transaction;
prompting [213] said legitimate user to enter said PIN of said token;
signing [214] said request with said user private key.

7. The method according to claim 6 wherein said step of prompting [213] said legitimate user to enter said PIN is replaced by the step of analyzing biometric data of said legitimate user.

8. The method according to any one of the previous claims wherein said checking step [260], in said commercial-like site, includes the steps of:
detecting [223] completion of signature by said second communications device;
checking [237] said signed request transaction with said public key of said legitimate user;
forwarding [238] a transaction status to said first communications device.

9. The method according to any one of the previous claims wherein said first communications device is a standard personal computer.

10. The method according to any one of the previous claims wherein said second communications device is a token enabled wireless mobile device.

11. A system, in particular a server implementing a commercial-like site, comprising means adapted for carrying out the method according to any one of the previous claims.

12. A computer readable medium comprising instructions for carrying out the method according to any one of the claims 1 to 10.

## Revendications

1. Procédé d'association de dispositifs de communications [400] [450] pour exécuter une transaction sécurisée sur un réseau non sécurisé [405] depuis un site électronique du type commercial [430], lesdits dispositifs de communications pouvant indépendamment communiquer avec ledit site électronique du type commercial, ledit site électronique du type commercial gérant un répertoire [425] des utilisateurs légitimes [415] ayant chacun un enregistrement d'identification [340], lesdits utilisateurs légitimes possédant chacun un jeton [460]; ledit procédé comprenant les étapes consistant à :
à chaque fois que l'un desdits utilisateurs légitimes [415] désire exécuter une transaction dite sécurisée :
préparer [240] ladite transaction sécurisée à partir d'un premier dit dispositif de communications [400] représentant des interfaces pour êtres humains [110], [120], [130] pour communiquer avec ledit site du type commercial [430],
lorsque cela est exécuté :
retransmettre audit site du type commercial, depuis ledit premier dispositif de communications, une approbation [205] du contenu de ladite transaction sécurisée,
lorsque ladite approbation est reçue dans ledit site du type commercial pour ladite transaction sécurisée préparée par ledit utilisateur légitime :
récupérer [235] dans ledit enregistrement d'identification [340] dudit utilisateur légitime, une identification d'un second dispositif de communications [320] par l'intermédiaire dudit utilisateur légitime peut être atteint,
délivrer [250] dans ledit serveur du type commercial, vers ledit second dispositif de communications, une demande pour faire signer ladite transaction sécurisée,
exécuter une signature [260] de ladite transaction sécurisée à partir dudit second dispositif de communications validé avec ledit jeton dudit utilisateur légitime en obtenant ainsi une transaction sécurisée signée,
transmettre [215] ladite transaction sécurisée signée en retour vers ledit site du type commercial,
contrôler [270] dans ledit site du type commercial ladite transaction sécurisée signée,
en mettant ainsi fin à ladite transaction sécurisée.

2. Procédé selon la revendication 1, dans lequel chaque dit enregistrement d'identification [340] dudit répertoire [300] dans ledit site du type commercial comprend :
une identification d'utilisateur [310] dudit utilisateur légitime,
une identification de dispositif [320] dudit du second dispositif de communications par l'intermédiaire duquel ledit utilisateur légitime peut être atteint,
une clé publique d'utilisateur [330] contenue dans ledit jeton possédé par ledit utilisateur légitime.

3. Procédé selon l'une quelconque des revendications précédentes, dans lequel ledit jeton [460] dudit utilisateur légitime comprend la mémorisation de :
une clé privée d'utilisateur,
un numéro d'identification personnel (PIN).

4. Procédé selon l'une quelconque des revendications précédentes, dans lequel ladite étape de préparation comprend les étapes consistant à :
accéder [201] à une application d'affaire de serveur de réseau Web [230] dans ledit site électronique du type commercial [430],
procurer, en réponse à une demande d'authentification [231] provenant de ladite application d'affaire de serveur de réseau Web, une pièce d'identité [202] pour être reconnu comme utilisateur légitime [232],
explorer [203] [233] ledit site électronique du type commercial,
remplir [204] [234] toutes les informations requises pour permettre l'exécution de ladite transaction du type commercial.

5. Procédé selon l'une quelconque des revendications précédentes, dans lequel ladite étape de délivrance [250] comprend les étapes de :
formatage [236], dans ledit site du type commercial, une demande pour faire signer ladite transaction sécurisée dans ledit second dispositif de communications, ladite étape consistant à formater une demande comprenant optionnellement les étapes supplémentaires consistant à :
signer une origine de ladite demande, ladite étape de signature de l'origine comprenant :
l'emploi de ladite clé publique d'utilisateur dudit utilisateur légitime,
l'emploi supplémentaire d'une clé privée dudit site de type commercial,
retransmission [221] depuis ledit site du type commercial, audit second dispositif de communications, de ladite demande,
attente [222] jusqu'à ce que ledit second dispositif de communications réponde.

6. Procédé selon l'une quelconque des revendications précédentes, dans lequel ladite étape d'exécution d'une signature [260] dans ledit second dispositif de communications, comprend les étapes consistant à :
contrôler [211] ladite demande pour faire signer ladite transaction sécurisée, ladite étape de contrôle comprenant optionnellement l'étape supplémentaire consistant à :
authentifier l'origine de ladite demande,
afficher [212] un contenu de ladite transaction sécurisée,
inviter [213] ledit utilisateur légitime à saisir ledit numéro PIN dudit jeton,
signer [214] ladite demande avec ladite clé privée de l'utilisateur.

7. Procédé selon la revendication 6, dans lequel ladite étape consistant à inviter [213] ledit utilisateur légitime à saisir ledit numéro PIN est remplacée par l'étape consistant à analyser des données biométriques dudit utilisateur légitime.

8. Procédé selon l'une quelconque des revendications précédentes, dans lequel ladite étape de contrôle [260], dans ledit site du type commercial, comprend les étapes consistant à :
détecter [223] l'exécution d'une signature par ledit second dispositif de communications,
contrôler [237] ladite transaction de demande signée avec ladite clé publique dudit utilisateur légitime,
retransmettre [238] une situation de transaction audit premier dispositif de communications.

9. Procédé selon l'une quelconque des revendications précédentes, dans lequel ledit premier dispositif de communications est un ordinateur personnel standard.

10. Procédé selon l'une quelconque des revendications précédentes, dans lequel ledit second dispositif de communications est un dispositif mobile sans fil validé par un jeton.

11. Système, en particulier un serveur mettant en oeuvre un site du type commercial, comprenant un moyen adapté pour exécuter le procédé selon l'une quelconque des revendications précédentes.

12. Support lisible par un ordinateur comprenant des instructions destinées à exécuter le procédé selon l'une quelconque des revendications 1 à 10.

## Patentansprüche

1. Verfahren zur Zuordnung von Datenübertragungseinheiten [400], [450], um von einer elektronischen handelsähnlichen Site [430] eine sichere Transaktion über ein unsicheres Netzwerk [405] durchzuführen, wobei die Datenübertragungseinheiten unabhängig voneinander mit der elektronischen handelsähnlichen Site Daten austauschen können, wobei die elektronische handelsähnliche Site ein Verzeichnis [425] mit berechtigten Benutzern [415] verwaltet, von jeden jeder über einen Identifikationsdatensatz [340] verfügt, wobei jeder der berechtigten Benutzer ein Token [460] besitzt, wobei das Verfahren die folgenden Schritte umfasst:
immer, wenn einer der berechtigten Benutzer [415] eine sichere Transaktion durchführen möchte:
Vorbereiten [240] der sicheren Transaktion von einer ersten Datenübertragungseinheit [400], die geeignete Benutzerschnittstellen [110], [120], [130] aufweist, um mit der handelsähnlichen Site [430] Daten auszutauschen; wenn dies geschehen ist:
Weiterleiten einer Genehmigung [205] des Inhalts der sicheren Transaktion von der ersten Datenübertragungseinheit an die handelsähnliche Site;
wenn die Genehmigung für die sichere Transaktion, die von dem berechtigten Benutzer vorbereitet wurde, auf der handelsähnlichen Site empfangen wird:
Abrufen [235] einer Kennung einer zweiten Datenübertragungseinheit [320] in dem Identifikationsdatensatz [340] des berechtigten Benutzers, über die der berechtigte Benutzer erreichbar ist;
Ausgeben [250] einer Anforderung in dem handelsähnlichen Server an die zweite Datenübertragungseinheit, die sichere Transaktion signieren zu lassen;
Leisten der Signatur [260] der sicheren Transaktion von der zweiten Datenübertragungseinheit, die mit dem Token des berechtigten Benutzers freigegeben wird, wodurch man eine signierte sichere Transaktion erhält ;
Zurückübertragen [215] der signierten sicheren Transaktion an die handelsähnliche Site;
Prüfen [270] der signierten sicheren Transaktion auf der handelsähnlichen Site;
**dadurch** Abschließen der sicheren Transaktion.

2. Verfahren nach Anspruch 1, wobei jeder Identifikationsdatensatz [340] des Verzeichnisses [300] auf der handelsähnlichen Site Folgendes enthält:
eine Benutzerkennung [310] eines berechtigten Benutzers;
eine Einheitenkennung [320] einer zweiten Datenübertragungseinheit, über die der berechtigte Benutzer erreichbar ist;
einen öffentlichen Schlüssel [330] des Benutzers, der in dem Token enthalten ist, das dem berechtigten Benutzer gehört.

3. Verfahren nach einem der vorhergehenden Ansprüche, wobei das Token [460] des berechtigten Benutzers die Speicherung von Folgendem einschließt:
einem privaten Schlüssel des Benutzers;
einer persönlichen Geheimzahl (PIN).

4. Verfahren nach einem der vorhergehenden Ansprüche, wobei der Schritt der Vorbereitung die folgenden Schritte beinhaltet:
Zugreifen [201] auf eine Geschäftsanwendung [230] eines Web-Servers auf der elektronischen handelsähnlichen Site [430];
als Reaktion auf eine Anforderung zur Prüfung der Identität [231] von der Geschäftsanwendung des Web-Servers Bereitstellen von Zugangsdaten [202], um als berechtigter Benutzer [232] erkannt zu werden;
Durchsuchen [203], [233] der elektronischen handelsähnlichen Site mit dem Browser;
Eingeben [204], [234] aller erforderlichen Informationen, um den Abschluss der handelsähnlichen Transaktion zu ermöglichen.

5. Verfahren nach einem der vorhergehenden Ansprüche, wobei der Schritt der Ausgabe [250] die folgenden Schritte beinhaltet :
Formatieren [236] einer Anforderung auf der handelsähnlichen Site, die sichere Transaktion in der zweiten Datenübertragungseinheit signieren zu lassen, wobei der Schritt der Formatierung einer Anforderung optional die folgenden weiteren Schritte beinhaltet:
Signieren des Ursprungs der Anforderung, wobei der Schritt der Signierung des Ursprungs Folgendes beinhaltet:
Verwenden des öffentlichen Benutzerschlüssels des berechtigten Benutzers;
zusätzliches Verwenden eines privaten Schlüssels der handelsähnlichen Site;
Weiterleiten [221] der Anforderung von der handelsähnlichen Site an die zweite Datenübertragungseinheit;
Warten [222], bis die zweite Datenübertragungseinheit antwortet.

6. Verfahren nach einem der vorhergehenden Ansprüche, wobei der Schritt des Leistens einer Signatur [260] in der zweiten Datenübertragungseinheit die folgenden Schritte beinhaltet:
Prüfen [211] der Anforderung, die sichere Transaktion signieren zu lassen, wobei der Schritt der Prüfung optional den folgenden weiteren Schritt beinhaltet:
Nachweisen der Echtheit des Ursprungs der Anforderung;
Anzeigen [212] des Inhalts der sicheren Transaktion;
Auffordern [213] des berechtigten Benutzers, die PIN des Token einzugeben;
Signieren [214] der Anforderung mit dem privaten Schlüssel des Benutzers.

7. Verfahren nach Anspruch 6, wobei der Schritt der Aufforderung [213] des berechtigten Benutzers zur Eingabe der PIN durch den Schritt der Auswertung von biometrischen Daten des berechtigten Benutzers ersetzt wird.

8. Verfahren nach einem der vorhergehenden Ansprüche, wobei der Schritt der Prüfung [260] auf der handelsähnlichen Site die folgenden Schritte beinhaltet:
Feststellen [223] der Fertigstellung der Signatur durch die zweite Datenübertragungseinheit;
Prüfen [237] der signierten Anforderungstransaktion mit dem öffentlichen Schlüssel des berechtigten Benutzers;
Weiterleiten [238] eines Transaktionsstatus an die erste Datenübertragungseinheit.

9. Verfahren nach einem der vorhergehenden Ansprüche, wobei die erste Datenübertragungseinheit ein standardmäßiger Personal Computer ist.

10. Verfahren nach einem der vorhergehenden Ansprüche, wobei die zweite Datenübertragungseinheit eine drahtlose mobile Einheit ist, die mit einem Token freigegeben wird.

11. System, insbesondere ein Server, der eine handelsähnliche Site ausführt, das ein Mittel umfasst, welches so ausgelegt ist, dass es das Verfahren nach einem der vorhergehenden Ansprüche durchführt.

12. Rechnerlesbarer Datenträger, der Befehle zur Durchführung des Verfahrens nach einem der Ansprüche 1 bis 10 umfasst.
